# EUROPEAN PATENT APPLICATION

(11) **EP 4 840 736 A1**
(43) Date of publication of application: **18.11.2026**
(21) Application number: 24902829.1
(22) Date of filing: 11.12.2024
(51) Int. Cl.: B62J 9/27, B62J 9/23, A45F 3/04, A45C 15/00

(54) **BACKPACK AND BACKPACK CONNECTION ASSEMBLY**

(30) Priority: 12.12.2023 CN 202323388998 U
(71) Applicant: Guangzhou Peilin Consulting Service Co., Ltd., Guangzhou, Guangdong 510630 (CN)
(72) Inventor: HUANG, Jianming, Guangzhou, Guangdong 510630 (CN)
(74) Representative: Metida
(86) International application number: PCT/CN2024/138307
(87) International publication number: WO 2025/124409

(57) **Abstract**

The present application relates to a backpack and a backpack connection assembly. The backpack comprises a backpack body and a first connector disposed on a side of the backpack body, the first connector being deployable from or concealable within the backpack body, and the first connector being detachably connectable to a second connector disposed on a bicycle seat post when deployed; the backpack can not only be used as a regular backpack but also be used in conjunction with a bicycle equipped with the connection assembly, achieving quick attachment and detachment without the need for a rear rack, and avoiding interference with the cyclist during riding.

## Description

### TECHNICAL FIELD

The present application relates to the technical field of bags, and more particularly to a backpack and a backpack connection assembly.

### BACKGROUND

For cargo loads positioned behind the seat post of a bicycle (including manual and electric bicycles), existing solutions typically involve installing a rear rack behind the bicycle seat post to hold items, which can be paired with bags to achieve cargo capacity. However, because installing a rear rack increases weight, affects aesthetics, and creates noise, it impacts the riding experience, leading some cyclists to avoid adding one.

Currently, there are also specialized tail bags that are fixed directly in the space behind the seat post using straps or auxiliary brackets. Because these are specialized bags, users do not use them for daily activities when not riding, requiring items to be transferred to a daily-use backpack after the ride. Furthermore, such specialized tail bags often adopt a specific shape that is wider at the top and narrower at the bottom to avoid interfering with the rider's inner/rear thighs; however, this tapered structure results in low space utilization when loading items.

### SUMMARY

To overcome at least one of the aforementioned drawbacks of the prior art, the present application provides a backpack and a backpack connection assembly. By integrating a support system into the backpack, it can be used as a regular daily backpack and also be quickly attached to or detached from a bicycle equipped with the connection assembly. This allows the user to detach and carry the backpack immediately after cycling without transferring items, thereby avoiding the need for rear-mounted support structures (such as rear racks), effectively improving the bicycle's aesthetics and reducing its weight. Simultaneously, it prevents interference with the rider's inner/rear thighs during cycling, optimizing the riding experience.

The technical solution of the present application is as follows:
In one aspect, the present application provides a backpack including a backpack body and a first connector disposed on a side of the backpack body. The first connector is deployable from or concealable within the backpack body, and the first connector is detachably connectable to a second connector disposed on a bicycle seat post when deployed.

Preferably, the first connector is disposed on a bottom, a front, or a back of the backpack body.

Preferably, the backpack further includes a connector A and a connector B, wherein the connector A and the connector B are disposed on other sides of a side where the first connector is located.

Preferably, the connector A is disposed on a left side of the backpack body, the connector B is disposed on a right side of the backpack body, and the first connector is disposed on the bottom of the backpack body; the first connector is a connector C, the connector A is configured to be detachably connected with a connector a disposed on a left side of a bicycle seat, the connector B is configured to be detachably connected with a connector b disposed on a right side of the bicycle seat, and the connector C is configured to be detachably connected with a connector c disposed on the bicycle seat post; the connector c is the second connector, a connection between the connector A and the connector a, a connection between the connector B and the connector b, and a connection between the connector C and the connector c together constitute a support structure for the backpack body, and the connection between the connector C and the connector c creates a spacing between the backpack body and the seat post.

Preferably, a base is fixedly disposed on the bottom of the backpack body, a mounting groove is provided on the base, one end of the mounting groove facing the seat post communicates with the exterior, and the mounting groove is configured for accommodating the connector C.

Preferably, the connector C is specifically a sleeve, and the connector c specifically includes a strut and a clamping hoop; the clamping hoop is configured to clamp the seat post, one end of the strut is connected to the clamping hoop, the strut matches the sleeve, and the strut is insertable directly into the sleeve to be locked by a locking member.

Preferably, the mounting groove is provided with a sliding groove parallel to a longitudinal direction thereof, the sleeve being in sliding connection with the sliding groove, at least 1/3 of a length of the sleeve remains within the mounting groove when the sleeve extends out of the mounting groove, and the sleeve is allowed to be limit-locked at an endpoint of a sliding stroke.

Preferably, a first rotating shaft is disposed at a position in the mounting groove adjacent to the seat post, and one end of the sleeve is rotatably sleeved on the first rotating shaft; a limiting lug is disposed at a position in the mounting groove away from the seat post; when an angle between the sleeve and the mounting groove is 0, the limiting lug is configured to limit the sleeve, and when the angle between the sleeve and the mounting groove is 180°, at least 1/3 of a length of the sleeve remains within the mounting groove.

Preferably, the sleeve is fixed within the mounting groove; one end of the strut is hinged to the clamping hoop, the strut is rotatable within a range of 0-90° relative to the seat post, and the strut is allowed to be limit-locked when at 0° and 90° relative to the seat post.

Preferably, the connection between the connector A and the connector a, and the connection between the connector B and the connector b, both adopt a snap-fit connection, a hook connection, a strapping connection, or hook-and-loop fastener connection.

Preferably, the connection between the connector A and the connector a, and the connection between the connector B and the connector b, both adopt a snap-fit connection, specifically: the connector A, the connector B, the connector a, and connector b each include an adjustable strap and a fastener, a length of the adjustable strap is adjustable, one end of the adjustable strap of the connector A and one end of the adjustable strap of the connector B are each connected to a fastener, and the other ends are each connected to the backpack body, one end of the adjustable strap of the connector a and one end of the adjustable strap of the connector b are each connected to a fastener, and the other ends are each connected to the bicycle seat, wherein the fastener of the connector A and the fastener of the connector b are both male fasteners, the fastener of the connector a and the fastener of the connector B are both female fasteners, and the fastener of the connector a and the fastener of the connector b are allowed to be snap-fitted together.

In another aspect, the present application provides a backpack connection assembly, including the above backpack, and further including a second connector for connecting to a bicycle seat post.

The present application provides a backpack connection assembly, including the above backpack, and further including a second connector for connecting to a bicycle seat post, a connector a for connecting to one side of a bicycle seat, and a connector b for connecting to the other side of the bicycle seat.

The beneficial effects of the present application are as follows:
(1) The backpack provided by the present application achieves quick installation and removal from a bicycle at least through the detachable connection between connector C and connector c, allowing the backpack to be securely fixed to the bicycle at at least one connection point during cycling without the need for the cyclist to carry it, while also eliminating the need for a rear rack, making cycling easier; upon reaching the destination, the backpack can be quickly detached from the bicycle, and the cyclist does not need to transfer items from any specialized bicycle bag, enabling immediate detachment, carrying, and departure, which is convenient for the cyclist to carry the backpack for other activities, and it can be used as a regular backpack even when not cycling;
(2) After the backpack provided by the present application is assembled with the bicycle, there is sufficient spacing between the bottom of the backpack and the seat post to prevent the backpack from interfering with the cyclist's movements, ensuring cycling experience and safety;
(3) Through the telescopic, rotating, or folding design of the sleeve, the backpack provided by the present application allows the sleeve to be stored in the mounting groove of the base when the backpack is detached from the bicycle, without affecting the daily use of the backpack.

### BRIEF DESCRIPTION OF DRAWINGS

To more clearly illustrate the technical solutions in the specific embodiments of the present application or the prior art, the drawings required for the description of the specific embodiments or the prior art will be briefly introduced below. In all the drawings, similar elements or parts are generally identified by similar reference signs. In the drawings, the elements or parts are not necessarily drawn to actual scale.
FIG. 1 is a structural schematic diagram of the backpack and backpack connection assembly provided by any one of Embodiments 1-3 of the present application;
FIG. 2 is a structural schematic diagram of the base of the backpack provided by any one of Embodiments 1-3 of the present application;
FIG. 3 is a schematic diagram of the backpack and bicycle provided by Embodiment 4 of the present application in a connected state;
FIG. 4 is a schematic diagram of the backpack and bicycle provided by Embodiment 4 of the present application in a separated state;

Reference signs: 1-Backpack Body, 11-Connector A, 12-Connector B, 13-Connector C, 131-Sleeve, 14-Base, 141-Mounting groove, 21-Connector a, 22-Connector b, 23-Connector c, 231-Clamping hoop, 232-strut, 31-Bicycle seat, 32-Seat post.

### DESCRIPTION OF EMBODIMENTS

To enable those skilled in the art to better understand the present application, the technical solutions in the embodiments of the present application will be described clearly and completely below in conjunction with the accompanying drawings. Obviously, the described embodiments are merely a part of the embodiments of the present application, rather than all of them. All other embodiments obtained by those of ordinary skill in the art based on the embodiments of the present application without creative efforts shall fall within the protection scope of the present application.

It should be noted that the terms such as "first", "second" in the specification, claims, and accompanying drawings of the present application are used to distinguish similar objects and are not necessarily used to describe a specific order or sequence. It should be understood that the data used in this way may be interchangeable under appropriate circumstances, so as to describe the embodiments of the present application herein.

In the present application, the orientation or positional relationships indicated by terms such as "upper", "lower", "inner" are based on the orientation or positional relationships shown in the drawings. These terms are mainly used to better describe the present application and its embodiments, and are not intended to limit the indicated device, element, or component to having a specific orientation or being constructed and operated in a specific orientation.

Furthermore, in addition to indicating orientation or positional relationships, the above terms may also be used to indicate other meanings. For example, the term "upper" may also be used to indicate a certain dependency or connection relationship in some cases. For those of ordinary skill in the art, the specific meanings of these terms in the present application can be understood according to specific circumstances.

In addition, terms such as "set", "provided with", "connected", "fixed" should be construed in a broad sense. For example, "connected" may be a fixed connection, a detachable connection, or an integral construction; it may be a mechanical connection or an electrical connection; it may be a direct connection, an indirect connection through an intermediate medium, or an internal communication between two devices, elements, or components. For those of ordinary skill in the art, the specific meanings of the above terms in the present application can be understood according to specific circumstances.

In addition, the term "a plurality of" means two or more.

It should be noted that, without conflict, the embodiments in the present application and the features in the embodiments may be combined with each other. The present application will be described in detail below with reference to the accompanying drawings and in conjunction with the embodiments.

### Embodiment 1

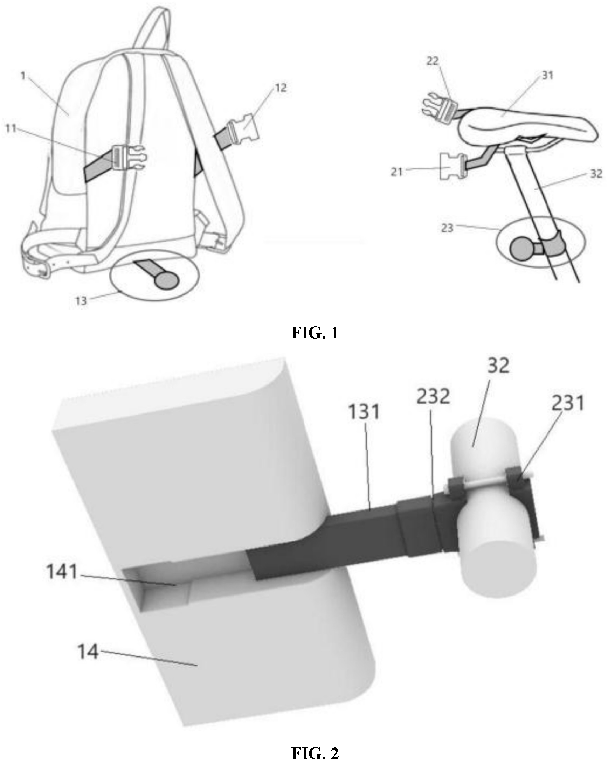

This embodiment provides a backpack, as shown in FIGS. 1 to 2, including a backpack body 1 and a connector C13 disposed at the bottom of the backpack body 1. The connector C13 is a first connector. The connector C13 may be deployed from or hidden within the backpack body 1, and when deployed, the connector C13 is detachably connected to a connector c23 disposed on the bicycle seat post 32. The connector c23 is a second connector. After the connector C13 is connected to the connector c23, the backpack body 1 is securely fixed to the rear of the bicycle seat.

Specifically, the connector C13 is disposed at the bottom of the backpack body 1, where the bottom is the bottom surface of the backpack body 1 when it is in an upright position.

Of course, in some other embodiments, the connector C13 may also be disposed on the back of the backpack body 1, where the back is the side of the backpack body 1 that comes into contact with the user's back when carried.

In some other embodiments, the connector C13 may also be disposed on the front of the backpack body 1, where the front is the side opposite to the back.

In this embodiment, the connector C13 is deployed from or hidden within the backpack body 1 through a telescopic mechanism. Specifically, the bottom of the backpack body 1 is provided with a mounting groove 141, within which a sliding groove (not shown) parallel to its longitudinal direction is provided. The sleeve 131 is in sliding connection with the sliding groove. When the sleeve 131 extends out of the mounting groove 141, at least 1/3 of its length remains within the mounting groove 141. The sleeve 131 may be limit-locked at the endpoints of its sliding stroke, allowing the connector C13 to remain relatively fixed when deployed or hidden. Of course, in other embodiments, the movement of the connector C13 may be achieved through other methods, such as folding or rotating; folding refers to the connector C13 rotating along a direction orthogonal to the surface it is on, while rotating refers to the connector C13 rotating along a direction parallel to the surface it is on.

After the connector C13 is deployed, it is connected to the connector c23 through a plug-in connection. Specifically, the connector c23 is provided with a slot for accommodating the connector C13, and the slot is provided with a locking member. After the connector C13 is inserted into the slot, it is restricted by the locking member, at which point the connector C13 and the connector c23 remain relatively fixed. To release the connection, the state of the locking member is first changed to disengage the connector C13 from the restricted state, at which point the connector C13 may be pulled out.

Of course, in some other embodiments, the connector C13 and the connector c23 can also use other connection methods, such as snap-fitting, interlocking, threaded connection, etc.

It should be noted that in this embodiment, the specific form of the backpack body includes, but is not limited to, a backpack, a shoulder bag, and a crossbody bag.

Such a design allows the backpack to be firmly fixed to the bicycle during cycling without the need to install a rear rack on the bicycle, and without the cyclist having to carry it, making cycling easier; secondly, there is sufficient spacing between the backpack and the seat post to prevent the backpack from interfering with the cyclist's movements; finally, upon reaching the cycling destination, the backpack may be quickly detached from the bicycle, allowing it to be carried away immediately.

### Embodiment 2

This embodiment provides a backpack. Referring to FIG. 1, based on Embodiment 1, for further fixation, the backpack body 1 is further provided with a connector A11 and a connector B12. The connector A11 and the connector B12 are respectively disposed on other sides of the side where the connector C13 is located, and the connector A11 and the connector B12 may be connected to each other. In this embodiment, the connector A11 and the connector B12 are fasteners; specifically, the connector A11 is a male fastener and the connector B12 is a female fastener. The connector A11 passes behind the bicycle seat and connects with the connector B12 to improve the firmness of the backpack body 1 and further prevent the backpack from shaking in different directions (left/right, front/back, up/down, or rotation). It can be appreciated that the connector A11 and the connector B12 also have a certain load-bearing effect.

In other embodiments, the connector A11 and the connector B12 may also be other structures capable of mating with each other for fixed connection, such as hook connection, strapping connection, or hook-and-loop fastener connection. The connection method between the connector A11 and the connector B12 is well known to those skilled in the art and will not be described in detail here.

### Embodiment 3

This embodiment provides a backpack, as shown in FIG. 1, including a backpack body 1, a connector A11 disposed on the left side of the backpack body 1, a connector B12 disposed on the right side of the backpack body 1, and a connector C13 disposed at the bottom of the backpack body 1. The connector A11 is used for detachable connection with a connector a21 disposed on the left side of the bicycle seat 31, the connector B12 is used for detachable connection with a connector b22 disposed on the right side of the bicycle seat 31, and the connector C13 is used for detachable connection with a connector c23 disposed on the bicycle seat post 32. The connection between the connector A11 and the connector a21, the connection between the connector B12 and the connector b22, and the connection between the connector C13 and the connector c23 together constitute a support structure for the backpack body 1, and the connection between the connector C13 and the connector c23 creates a spacing between the backpack body 1 and the seat post 32.

It should be noted that after the backpack is assembled with the bicycle, the main load is borne by the connectors on the left and right sides (the connection between the connector A11 and the connector a21 and the connection between the connector B12 and the connector b22); the main purpose of the bottom connector (the connection between the connector C13 and the connector c23) is to create a spacing between the backpack body 1 and the seat post 32, so as to prevent the backpack from interfering with the inner/rear side of the rider's thighs and causing disturbance to the rider; another purpose of the bottom connector is to limit excessive swaying and rotation of the backpack during riding, thereby improving stability; in addition, the bottom connector can also provide auxiliary support during the assembly and disassembly of the backpack.

In this embodiment, in order to provide a stable and reliable mounting position for the connector C13, a base 14 is fixedly disposed at the bottom of the backpack body 1. The base 14 is preferably made of plastic. As shown in FIG. 2, a mounting groove 141 is provided on the base 14, with one end of the mounting groove 141 facing the seat post 32 being in communication with the outside. The mounting groove 141 is used to accommodate the connector C13. The provision of the base 14 also ensures that the backpack body 1 can remain standing on a flat surface when detached from the bicycle, making it less likely to tip over. To optimize the aesthetics of the backpack, the outer surface of the base 14 may also be covered with fabric.

In this embodiment, as shown in FIG. 2, the connector C13 is specifically a sleeve 131, and the connector c23 specifically includes a strut 232 and a clamping hoop 231. The clamping hoop 231 clamps the seat post 32, one end of the strut 232 is connected to the clamping hoop 231, the strut 232 matches the sleeve 131, and the strut 232 may be inserted directly into the sleeve 131 and locked by a pin;

That is, the fixed connection between the connector C13 and the connector c23 is achieved by inserting the strut 232 into the sleeve 131 and locking it with a pin. The connector C13 and the connector c23 are preferably made of aluminum alloy. As shown in FIG. 2, the sleeve 131 preferably adopts a sleeve 131 with a rounded rectangular cross-section, and the cross-sectional shape and size of the strut 232 preferably match the sleeve 131 exactly. Compared with other shapes, this design can provide better strength and rigidity, increase the load-bearing capacity of the sleeve 131, enable it to better withstand loads and resist compression, and simultaneously prevent the backpack from swaying or rotating left and right during cycling, thereby optimizing stability. The rounded design can reduce the bending stress concentration generated in the sleeve 131 during use, thereby improving its durability and service life;

It should be noted that the connection method between the connector C13 and the connector c23 includes, but is not limited to, sleeve connection or snap-fit connection; in some other embodiments, a threaded connection may be used between the sleeve 131 and the strut 232 instead of pin locking, in which case a bearing rotating connection may be used between the strut 232 and the clamping hoop 231 to achieve the same effect; in some other embodiments, the positions of the sleeve 131 and the strut 232 may be swapped, that is, the connector C13 specifically is the strut 232, and the connector c23 specifically includes the sleeve 131 and the clamping hoop 231, which can also achieve the same effect.

Further, a first rotating shaft is provided in the mounting groove 141 adjacent to the seat post 32, one end of the sleeve 131 is rotatably sleeved on the first rotating shaft, and a limiting lug is provided in the mounting groove 141 away from the seat post 32. When the angle between the sleeve 131 and the mounting groove 141 is 0, the limiting lug is used to limit the sleeve 131; when the angle between the sleeve 131 and the mounting groove 141 is 180° , at least 1/3 of the length of the sleeve 131 remains within the mounting groove 141.

Specifically, in this embodiment, the sleeve 131 adopts a rotatable and foldable design. With this design, when the backpack is detached from the bicycle, the sleeve 131 is completely stowed within the mounting groove 141 of the base 14 without being exposed, forming an angle of 0° with the mounting groove 141, and the limiting lug acts to limit the sleeve 131. When the bicycle is needed to carry the backpack, the user can manually rotate the sleeve 131 to overcome the restriction of the limiting lug and continue rotating until the angle between the sleeve 131 and the mounting groove 141 is 180° . At this point, it may be precisely aligned and inserted into the strut 232, and the connection between the two can then be locked through a pin. Furthermore, since at least 1/3 of the length of the sleeve 131 remains within the mounting groove 141 at this time, the lever principle may be utilized to increase the stability and load-bearing capacity of the connection. The connection between connector A11 and connector a21, as well as the connection between connector B12 and connector b22, can serve to assist in securing the backpack. Upon reaching the destination, the connections between connector A11 and connector a21, between connector B12 and connector b22, and between connector C13 and connector c23 are released, and the sleeve 131 is then rotated back to an angle of 0 with the mounting groove 141, allowing the backpack to be carried away.

It should be noted that in this embodiment, the connector C13 is specifically a straight sleeve 131. In some other embodiments, the connector C13 may also adopt a structure of an isosceles triangular plate + straight sleeve 131, where the straight sleeve 131 is embedded on the perpendicular bisector of the isosceles triangular plate, and the base of the isosceles triangular plate is hinged to the mounting groove 141 to achieve a triangular support effect.

It should be noted that in this embodiment, the specific forms of the backpack body include, but are not limited to, backpacks, shoulder bags, and crossbody bags.

In this embodiment, the connection methods that may be used between connector A11 and connector a21, and between connector B12 and connector b22, include, but are not limited to, snap-fit connection, hook connection, strapping connection, or hook-and-loop fastener connection.

More specifically, as shown in FIG. 1, the connector A11, connector B12, connector a21, and connector b22 of this embodiment each include an adjustable strap and a fastener. The length of the adjustable strap is adjustable. One end of the adjustable strap of connector A11 and one end of the adjustable strap of connector B12 are each connected to the fastener, while the other ends are each connected to the backpack body 1. One end of the adjustable strap of connector a21 and one end of the adjustable strap of connector b22 are each connected to the fastener, while the other ends are each connected to the bicycle seat 31. The fastener of connector A11 and the fastener of connector b22 are both male fasteners, while the fastener of connector a21 and the fastener of connector B12 are both female fasteners, and the fastener of connector a21 and the fastener of connector b22 may be snap-fitted together.

It should be noted that after the user has engaged the fasteners of connector A11 with those of connector a21, and the fasteners of connector B12 with those of connector b22, it is necessary to ensure that the adjustable straps of each connector are in a tensioned state, thereby ensuring that the main load of the backpack is borne by the left and right connectors, reducing damage to the bottom connector and extending the service life of the backpack connection assembly;

With this design, not only can connector A11 and connector a21, as well as connector B12 and connector b22, be quickly attached and detached, but connector a21 and connector b22 may also be engaged with each other when the backpack is not mounted, preventing connector a21 and connector b22 from swinging significantly with the bicycle frame when it is used without the backpack, which would otherwise interfere with riding.

This embodiment also provides a backpack connection assembly, as shown in FIG. 1, which includes the backpack described above, and further includes a connector a21 for connecting to the left side of the bicycle seat 31, a connector b22 for connecting to the right side of the bicycle seat 31, and a connector c23 for connecting to the bicycle seat post 32, where the connector a21, the connector b22, and the connector c23 are all fixedly connected to the bicycle, more preferably using a detachable fixed connection, so as to facilitate replacement in case of local failure or damage.

### Embodiment 4

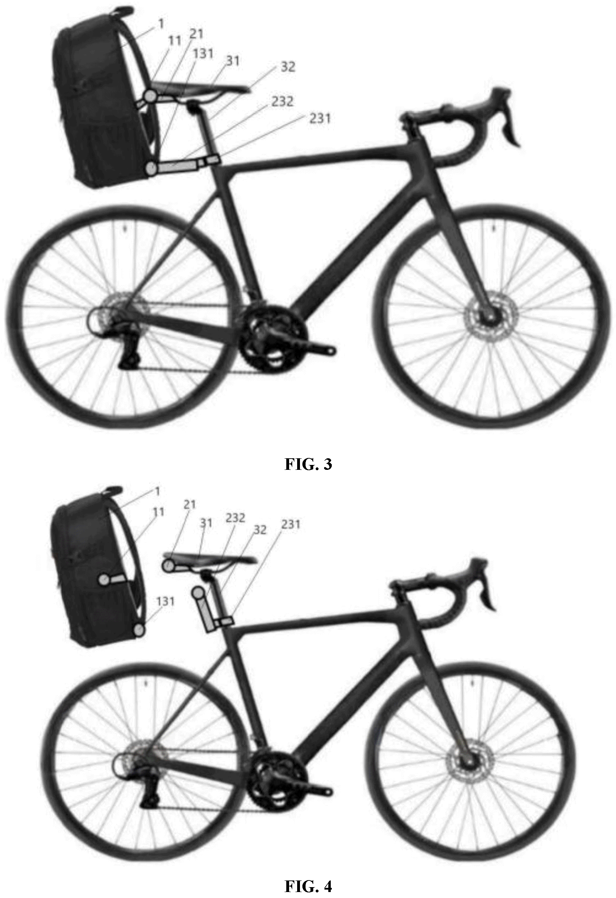

This embodiment provides a backpack, as shown in FIGS. 3 to 4, which is substantially the same as the backpack provided in Embodiment 3, with the difference between the two being:
In this embodiment, the sleeve 131 is fixed within the mounting groove 141; one end of the strut 232 is hinged to the clamping hoop 231, and the strut 232 can rotate relative to the seat post 32 within a range of 0-90°, and may be limit-locked when the angle between the strut 232 and the seat post 32 is 0° and 90° .

That is, in this embodiment, the sleeve 131 adopts a fixed design, while the strut 232 adopts a rotatable and foldable design; with this design, when the bicycle needs to be used to carry the backpack, the user can rotate the strut 232 to form an angle of 90° with the seat post 32, at which time the strut 232 faces the sleeve 131 horizontally disposed in the mounting groove 141, and the backpack may be moved so that the sleeve 131 fits over the strut 232, and the connection between the two is locked by a pin, while the connection between the connector A11 and the connector a21 and the connection between the connector B12 and the connector b22 can serve to assist in fixing the backpack; after arriving at the riding destination, the connections between the connector A11 and the connector a21, between the connector B12 and the connector b22, and between the connector C13 and the connector c23 are released, and then the strut 232 is rotated back to an angle of 0 with the seat post 32, which can reduce the presence of the strut 232 and allow the backpack to be carried away directly.

Finally, it should be noted that the above embodiments are only intended to illustrate, rather than to limit the technical solutions of the present application; although the present application has been described in detail with reference to the foregoing embodiments, those of ordinary skill in the art should understand that they can still modify the technical solutions described in the foregoing embodiments, or perform equivalent replacements for some or all of the technical features thereof; and these modifications or replacements do not cause the essence of the corresponding technical solutions to depart from the scope of the technical solutions of the embodiments of the present application, and they shall fall within the scope of the claims and description of the present application.

## Claims

1. A backpack, comprising a backpack body (1) and a first connector (13) disposed on a side of the backpack body (1), wherein the first connector (13) is deployable from or concealable within the backpack body (1), and the first connector (13) is detachably connectable to a second connector disposed on a bicycle seat post (32) when deployed.

2. The backpack according to claim 1, wherein the first connector (13) is disposed on a bottom, a front, or a back of the backpack body (1).

3. The backpack according to claim 2, further comprising a connector A (11) and a connector B (12), wherein the connector A (11) and the connector B (12) are disposed on other sides of a side where the first connector (13) is located.

4. The backpack according to claim 3, wherein the connector A (11) is disposed on a left side of the backpack body (1), the connector B (12) is disposed on a right side of the backpack body (1), and the first connector (13) is disposed on the bottom of the backpack body (1);
the first connector (13) is a connector C (13), the connector A (11) is configured to be detachably connected with a connector a (21) disposed on a left side of a bicycle seat (31), the connector B (12) is configured to be detachably connected with a connector b (22) disposed on a right side of the bicycle seat (31), and the connector C (13) is configured to be detachably connected with a connector c (23) disposed on the bicycle seat (31)seat post (32); and
the connector c (23) is the second connector, a connection between the connector A (11) and the connector a (21), a connection between the connector B (12) and the connector b (22), and a connection between the connector C (13) and the connector c (23) together constitute a support structure for the backpack body (1), and the connection between the connector C (13) and the connector c (23) creates a spacing between the backpack body (1) and the seat post (32).

5. The backpack according to claim 4, wherein a base (14) is fixedly disposed on the bottom of the backpack body (1), a mounting groove (141) is provided on the base (14), one end of the mounting groove (141) facing the seat post (32) communicates with the exterior, and the mounting groove (141) is configured for accommodating the connector C (13).

6. The backpack according to claim 5, wherein the connector C (13) is specifically a sleeve (131), and the connector c (23) specifically comprises a strut (232) and a clamping hoop (231); and
the clamping hoop (231) is configured to clamp the seat post (32), one end of the strut (232) is connected to the clamping hoop (231), the strut (232) matches the sleeve (131), and the strut (232) is insertable directly into the sleeve (131) to be locked by a locking member.

7. The backpack according to claim 6, wherein the mounting groove (141) is provided with a sliding groove parallel to a longitudinal direction thereof, the sleeve (131) being in sliding connection with the sliding groove, at least 1/3 of a length of the sleeve (131) remains within the mounting groove (141) when the sleeve (131) extends out of the mounting groove (141), and the sleeve (131) is allowed to be limit-locked at an endpoint of a sliding stroke.

8. The backpack according to claim 6, wherein a first rotating shaft is disposed at a position in the mounting groove (141) adjacent to the seat post (32), and one end of the sleeve (131) is rotatably sleeved on the first rotating shaft;
a limiting lug is disposed at a position in the mounting groove (141) away from the seat post (32); and
when an angle between the sleeve (131) and the mounting groove (141) is 0°, the limiting lug is configured to limit the sleeve (131), and when the angle between the sleeve (131) and the mounting groove (141) is 180°, at least 1/3 of a length of the sleeve (131) remains within the mounting groove (141).

9. The backpack according to claim 6, wherein the sleeve (131) is fixed within the mounting groove (141); and
one end of the strut (232) is hinged to the clamping hoop (231), the strut (232) is rotatable within a range of 0-90° relative to the seat post (32), and the strut (232) is allowed to be limit-locked when at 0° and 90° relative to the seat post (32).

10. The backpack according to claim 4, wherein the connection between the connector A (11) and the connector a (21), and the connection between the connector B (12) and the connector b (22), both adopt a snap-fit connection, a hook connection, a strapping connection, or hook-and-loop fastener connection.

11. The backpack according to claim 10, wherein the connection between the connector A (11) and the connector a (21), and the connection between the connector B (12) and the connector b (22), both adopt a snap-fit connection, specifically: the connector A (11), the connector B (12), the connector a (21), and connector b (22) each comprise an adjustable strap and a fastener, a length of the adjustable strap is adjustable, one end of the adjustable strap of the connector A (11) and one end of the adjustable strap of the connector B (12) are each connected to a fastener, and the other ends are each connected to the backpack body (1), one end of the adjustable strap of the connector a (21) and one end of the adjustable strap of the connector b (22) are each connected to a fastener, and the other ends are each connected to the bicycle seat (31), wherein the fastener of the connector A (11) and the fastener of the connector b (22) are both male fasteners, the fastener of the connector a (21) and the fastener of the connector B (12) are both female fasteners, and the fastener of the connector a (21) and the fastener of the connector b (22) are allowed to be snap-fitted together.

12. A backpack connection assembly, comprising the backpack according to any one of claims 1-11, and further comprising a second connector (23) for connecting to a bicycle seat post (32).

13. A backpack connection assembly, comprising the backpack according to any one of claims 4-11, and further comprising a second connector (23) for connecting to a bicycle seat post (32), a connector a (21) for connecting to one side of a bicycle seat (31), and a connector b (22) for connecting to the other side of the bicycle seat (31).
